Europäisches Patentamt

(19) European Patent Office

Office européen des brevets

(11) Publication number: **0 159 093**

**B1**

(12) # EUROPEAN PATENT SPECIFICATION

(45) Date of publication of patent specification: **02.11.89**

(51) Int. Cl.⁴: **A 01 F 15/14**

(21) Application number: **85200564.4**

(22) Date of filing: **15.04.85**

(54) Twine wrapping apparatus for a roll baling machine.

(30) Priority: **16.04.84 US 600872**
**16.04.84 US 600745**
**16.04.84 US 600750**

(43) Date of publication of application:
**23.10.85 Bulletin 85/43**

(45) Publication of the grant of the patent:
**02.11.89 Bulletin 89/44**

(84) Designated Contracting States:
**DE FR GB**

(56) References cited:
**EP-A-0 085 817**
**FR-A-2 362 575**
**FR-A-2 366 786**
**FR-A-2 483 166**
**GB-A-2 150 073**
**US-A-3 064 556**

(73) Proprietor: **FORD NEW HOLLAND, INC. (a Delaware corp.)**
**500 Diller Avenue**
**New Holland Pennsylvania 17557 (US)**

(72) Inventor: **Campbell, Willis R.**
**Route 4, Box 58**
**Ephrata, PA 17522 (US)**
Inventor: **Walker, James D.**
**509 Amesbury Road**
**Lancaster, PA 17601 (US)**
Inventor: **Shenberger, Paul S.**
**71 Park Road**
**Wyomissing Hills, PA 19609 (US)**

(74) Representative: **Vandenbroucke, Alberic T.J.**
**FORD NEW HOLLAND N.V. Leon Claeysstraat 3A**
**B-8210 Zedelgem (BE)**

Courier Press, Leamington Spa, England.

EP 0 159 093 B1

## Description

This invention relates generally to roll baling machines typically referred to as round balers which form cylindrical roll bales of crop material. In particular, this invention relates to a twine wrapping apparatus including a twine cutting and clamping apparatus for such roll baling machines.

U.S. Patent No. 4,167,844 discloses a twine wrapping apparatus including a drag link connected between a cam follower link and a driven link. The cam follower link carries a roller engaged with a cam plate, and the driven link is connected to a twine dispensing tube. When the cam plate is rotated, the roller on the cam follower link follows the peripheral contour of the cam plate so that the cam follower link moves the drag link in a manner which results in rotation of the driven link and pivoting movement of the twine dispensing tube. A significant disadvantage of this twine wrapping apparatus is that precise adjustments of the cam plate and the drag link are required in order for the apparatus to operate properly.

U.S. Patent No. 4,306,494 discloses a twine cutting and clamping apparatus which includes a twine guide fork movable into and out of a slot formed in a bracket. A twine cutting blade is fixed to the bottom of the bracket. When the twine guide fork is moved into the slot in the bracket, the twine is pulled against the cutting blade to be cut. The twine is also clamped between a bar formed on the twine guide fork and the sides of the slot in the bracket. When the twine guide fork is moved out of the bracket slot, the twine is released. A disadvantage of this apparatus is that the twine must be pulled very taut in order to be effectively cut by the cutting blade.

U.S. Patent No. 4,169,410 discloses a twine severing mechanism including a pair of cutting blades movable into and out of engagement with a pair of striker plates to cut twine. The cutting blades are mounted on an elongated rod, and their movement is controlled by a pair of control rods which are connected to a pair of latch plates. When the control rods are displaced, substantially simultaneous movement of the cutting blades is effected due to the elongated rod and the latch plates. A disadvantage of this twine severing mechanism is that it is rather complex and thus difficult to assemble.

Finally, U.S. 3,064,556 discloses a very complicated twine wrapping apparatus for a roll baling machine and which includes two twine dispensing members which are mounted on the base frame for pivotal movement back-and-forth between retracted rest positions and wrapping start positions. Complicated actuator means are provided which include a shuttle member which is movable back-and-forth between opposed extreme positions along a generally rectilinear path. Said shuttle member is drivingly connected to the twine dispensing members for, upon movement of the former along said generally rectilinear path, causing the latter to pivot. A gear rack is carried on the shuttle member which is cooperable with a gear segment; said gear rack and gear segment forming part of the actuator means and being operable to move the shuttle member along said generally rectilinear path.

It is therefore an object of the present invention to provide a new twine wrapping apparatus including a twine dispensing member and twine clamping and twine cutting means and which is simple in design and therefore is easy to assemble without requiring critical adjustments and which furthermore is efficient and trouble free in operation.

The present invention is directed to a novel twine wrapping apparatus for use in a roll baling machine having a base frame; the twine wrapping apparatus comprising:

a twine dispensing member mounted on the base frame for pivotal movement back-and-forth between a retracted rest position and a dispensing start position;

a shuttle member movably supported on the base frame for back-and-forth movement between opposed extreme positions along a generally rectilinear path; said shuttle member being drivingly connected to the twine dispensing member for, upon movement of the former along said generally rectilinear path, causing the latter to pivot from the rest position to the dispensing start position when the shuttle member is shifted in a first direction and from the dispensing start position to the rest position when the shuttle member is shifted in a further direction opposite to the first direction; and

actuating means supported on the base frame and operable to move the shuttle member along said generally rectilinear path.

Said twine wrapping apparatus further also comprises a gear segment which is cooperable with a gear rack carried on the shuttle member.

Said roll baling machine is characterized in that:

the actuating means are operatively connected to the shuttle member in a manner to move by force the latter back-and-forth along said generally rectilinear path; and

the gear segment is fixedly coupled to the twine dispensing member and is in permanent intermeshing engagement with the gear rack on the shuttle member to translate said back-and-forth, generally rectilinear movement of the shuttle member into said back-and-forth rotational movement of the dispensing member.

In a preferred embodiment of the invention, the twine wrapping apparatus comprises:

first and second twine dispensing members pivotally mounted on the base frame,

first and second gear segments connected to the first and second twine dispensing members, respectively; and

first and second gear racks carried on said shuttle member in permanent intermeshing engagement with the first and second gear segments, respectively, for, upon back-and-forth movement of the shuttle member along said generally rectilinear path, pivoting the first and second twine dispensing members.

The twine wrapping apparatus according to the present invention also comprises a twine cutting and clamping means including a cutting member, a resilient member, and an arm movable between a closed position and an open position. The arm has a first edge which cooperates with the cutting member to cut twine between this first edge of the arm and the cutting member when the arm is moved to the closed position. The arm also has a second edge which cooperates with the resilient member to clamp twine between this second edge of the arm and the resilient member when the arm is moved to the closed position. The twine is released from being clamped between the second edge of the arm and the resilient member when the arm is moved to the open position.

In the preferred embodiment of the invention comprising the dual twine wrapping apparatus, the twine cutting and clamping means include first and second cutting members, first and second resilient members and first and second arms each having one edge adapted for, in cooperation with a corresponding cutting member, cutting twine and another edge adapted for, in cooperation with a corresponding resilient member, clamping twine. First and second spur gears are connected, respectively, to the first and second arms, and the first and second spur gears are in intermeshing engagement with each other. The mechanism also includes a lever connected to the first arm for pivoting the first arm. The first and second spur gears cause concurrent pivoting of the second arm when the first arm is pivoted by the lever.

A breakaway mechanism may be provided coupling the twine dispensing member to the gear segment for permitting the twine dispensing member to be uncoupled from the gear segment when a predetermined load is exerted on the twine dispensing member during its pivoting movement.

The breakaway mechanism may include a plate secured to the twine dispensing member with projections formed thereon for engagement in grooves formed in a plate coupled to the gear segment. A spring is also provided in the breakaway mechanism to urge the projections on the plate into the grooves in the gear segment.

A roll baling machine embodying the present invention will now be described in greater detail by way of example with reference to the accompanying drawings, in which:

Fig. 1 is a side elevation view of a roll baling machine incorporating the preferred embodiment of the twine wrapping apparatus;

Fig. 2 is an enlarged sectional view taken on lines 2-2 of Fig. 1;

Fig. 3 is a view taken on lines 3-3 of Fig. 2;

Fig. 4 is a view taken on lines 4-4 of Fig. 3;

Fig. 5 is an enlarged sectional view taken on lines 5-5 of Fig. 3;

Fig. 6 is an enlarged sectional view taken on lines 6-6 of Fig. 3;

Fig. 7 is an enlarged sectional view taken on lines 7-7 of Fig. 2;

Fig. 8 is an enlarged sectional view taken on lines 8-8 of Fig 2;

Fig. 9 is an enlarged sectional view taken on lines 9-9 of Fig. 3; and

Figs. 10-13 are schematic views of the mechanism shown in Figs. 6-9.

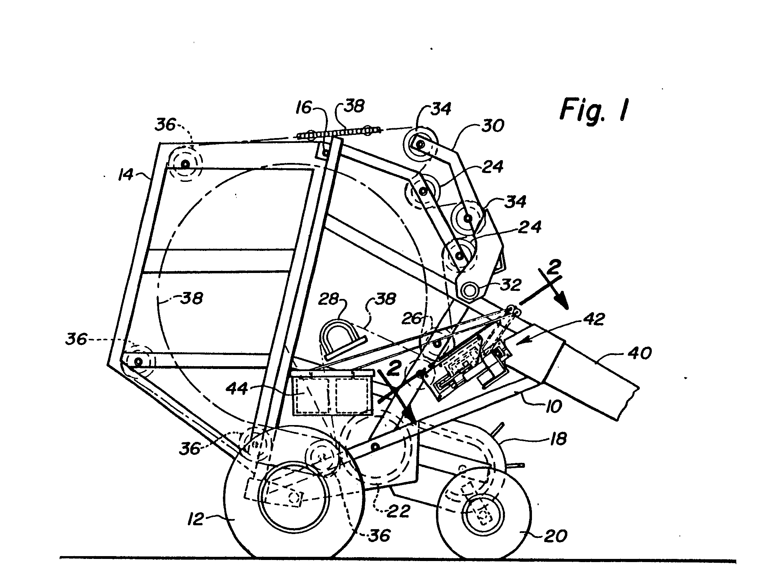

Referring to Fig. 1, a roll baling machine incorporating the preferred embodiment of the present invention includes a base frame 10 supported by a pair of wheels 12, and a rear frame 14 pivotally connected at 16 to the base frame 10 by suitable bearings. A pickup unit 18 is mounted on the base frame 10 and is supported by wheels 20. A floor roller 22, guide members 24, and drive sprockets 26 are rotatably mounted on the base frame 10. Also, cam guide members 28 are supported on the base frame 10. An arm assembly 30 is rotatably mounted on the base frame 10 by a tube 32, and the arm assembly 30 carries guide members 34 which are rotatable. A plurality of guide members 36 are rotatably supported on the rear frame 14. A bale forming apron 38 is movably supported on the drive sprockets 26, the guide members 24, 34 and 36, and the cam guide members 28. The bale forming apron 38 is preferably comprised of a pair of endless link type chains connected at spaced intervals by transverse bars or slats. When the machine is empty, the apron 38 is supported on the cam guide members 28 to define a bale chamber having an initial wedge shape in side elevation. During bale formation, the apron 38 is lifted off the cam guide members 28 as the bale chamber expands to a generally cylindrical shape.

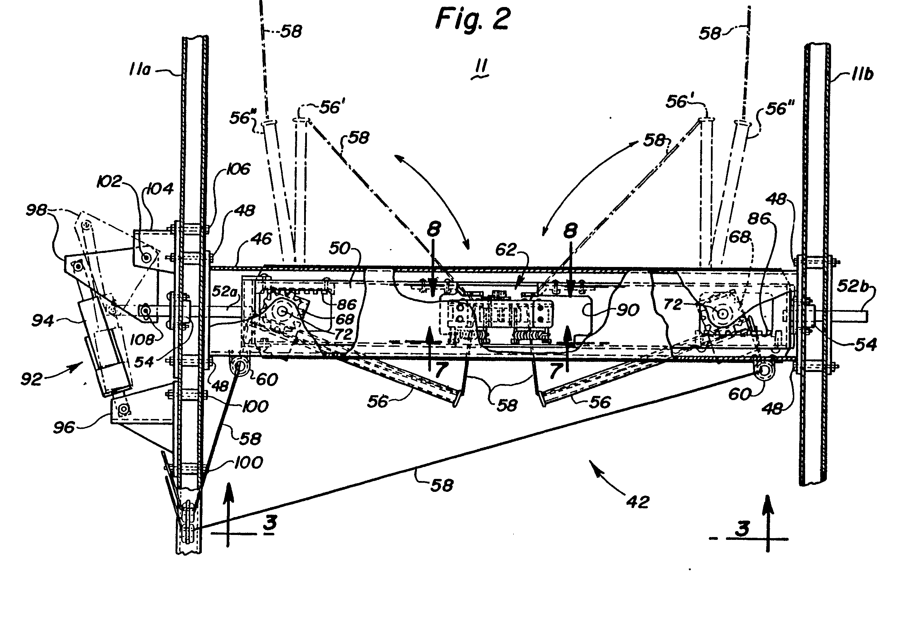

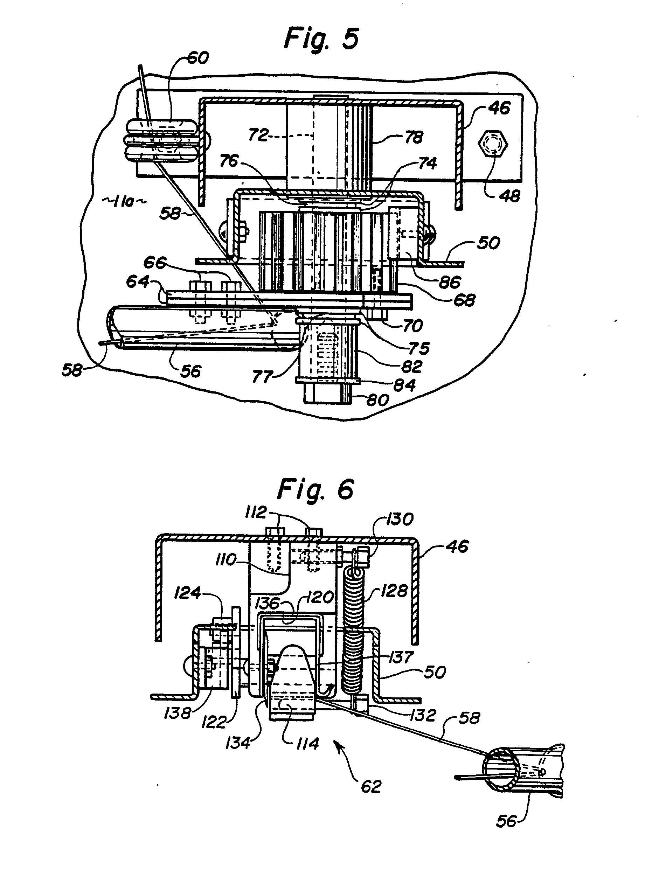

According to the present invention, a twine wrapping apparatus 42 is supported on the base frame 10 and a twine box 44 is provided for supplying twine to the twine wrapping apparatus 42. As seen in Figs. 2, 3, and 4, the twine wrapping apparatus 42 includes a support beam 46 which extends transversely between the side walls 11a,11b of the base frame 10 and is connected thereto by bolts 48. As seen in Fig. 5, the beam 46 is of a generally inverted U-shaped cross section. The twine wrapping apparatus 42 also includes a shuttle member 50 which is supported at its ends by rods 52a, 52b slidably disposed in bearings 54 mounted in the side walls 11a, 11b for permitting movement of the shuttle member 50 generally transversely of the base frame 10 in the space 11 defined between the side walls 11a, 11b. As seen in Fig. 5, the shuttle member 50 is generally channel or top hat-shaped in cross section. Twine dispensing members such as twine tubes or arms 56 are rotatably supported on the support beam 46, and strands of twine 58 extend from the twine box 44 through twine guides 60 mounted on the support beam 46, then through the twine tubes 56 and into a cut and clamp mechanism 62 which is also supported on the support beam 46.

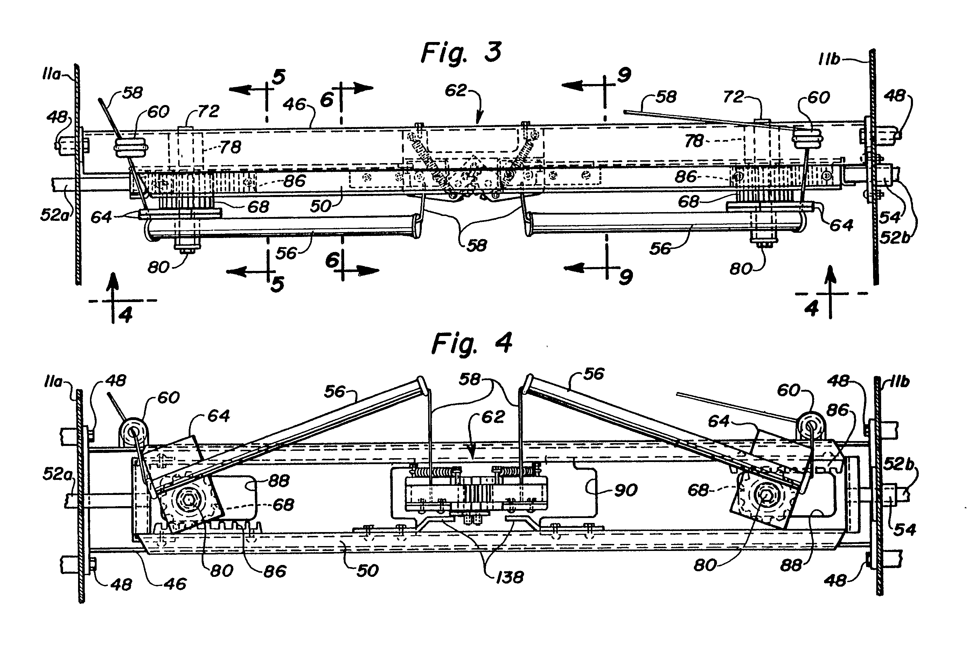

The twine tubes 56 are each welded to the lower one of a pair of plates 64 as seen in Fig. 5, and the plates 64 are connected to each other by bolts 66. The plates 64 are fixed to pinions 68 by bolts 70, only one bolt 70 being shown in Fig. 5. The pinions 68 are rotatably mounted on shafts 72 which are fixed at their upper ends to the support beam 46. As will be apparent from what follows hereafter, the pinions 68 may be replaced by gear segments of preferably more than 90° but less than 180°. A pair of washers 74 and a bearing member 76 are disposed between the upper side of each pinion 68 and a stabilizer block 78 which is positioned between the uppermost washer 74 and the support beam 46. Another pair of washers 75 and another bearing member 77 are disposed underneath the lowermost plate 64, and a bolt 80 is threaded into the bottom end of each shaft 72. A spacer collar 82 and a washer 84 are disposed between the lowermost washer 75 and the head of each bolt 80. When the bolts 80 are tightened into the shafts 72, the twine tubes 56 are, in effect, fixed to and will rotate with the pinions 68 as will be described later. The shuttle member 50 carries gear racks 86 which have teeth in intermeshing engagement with the teeth of the pinions 68. As seen in Fig. 4, openings 88 are provided in the top of the shuttle member 50 near the ends thereof to accommodate the stabilizer blocks 78, and another opening 90 is provided in the top of the shuttle member 50 near the center thereof to accommodate the cut and clamp mechanism 62.

Referring now to Fig. 2, the mechanism 92 for actuating the twine wrapping apparatus 42 includes a linear actuator 94 which is pivotably connected at one end to a bracket 96 and at the other end to a lever arm 98. The bracket 96 is secured to side wall 11a of the base frame 10 by bolts 100. The lever arm 98 is pivotably connected by a pin 102 to a bracket 104 which is fixed to the side wall 11a of the base frame 10 by two of the bolts 48 and by a further bolt 106. The lever arm 98 is also pivotably connected by a pin 108 to the end of the rod 52a which extends through the side wall 11a of the base frame 10. When the linear actuator 94 is extended as shown in Fig. 2, the lever arm 98 is pivoted on pin 102 from the position shown in full lines to the phantom position thereby moving the shuttle member 50 generally transversely toward the side wall 11a of the base frame 10. This causes the gear racks 86 on the shuttle member 50 to move in a direction which will cause concurrent rotation of the pinions 68 on the shafts 72 in opposite directions with respect to each other. Such rotation of the pinions 68 will cause simultaneous pivoting movement of the twine tubes 56 in opposite directions with respect to each other from their home or rest positions shown in full lines to their dispensing positions shown in phantom lines at 56''. Opposite pivoting movement of the twine dispensing tube 56 is obtained by providing the respective gear racks 86 at opposite sides of the respective pivotal mountings of said twine dispensing tubes 56. Subsequent contraction of the linear actuator 94 will move the shuttle member 50 back toward the side wall 11b of the base frame 10 and thereby cause simultaneous pivoting movement of the twine tubes 56 back to their home or rest positions shown in full lines. As can be taken from Fig. 2, the twine dispensing tubes 56 preferably have their pivotal mountings proximate to the respective opposite side walls 11a and 11b and generally face each other when positioned in their rest positions. When moved to their twine dispensing positions, said twine dispensing tubes 56 extend generally parallel to the adjacent side walls 11a, 11b. Consequently the twine dispensing tubes 56 are pivoted through an arc of generally a quarter of a circle when moved between their rest and twine dispensing positions. Actually the arc of movement is slightly more than 90° but is subtantially less than 180°, as can be derived from Fig. 2. Accordingly, the pinions 68, during operation, are used only for about slightly more than a quarter of their circumference. Hence said pinions 68 may be replaced by gear segments of slightly more than 90° in circumference. As seen in Figs. 6, 7, and 8, the cut and clamp mechanism 62 includes a body member 110 which is fastened to the support beam 46 by four bolts 112. A pair of arms 114 are mounted on pins 116 which are pivoted on the body, member 110.

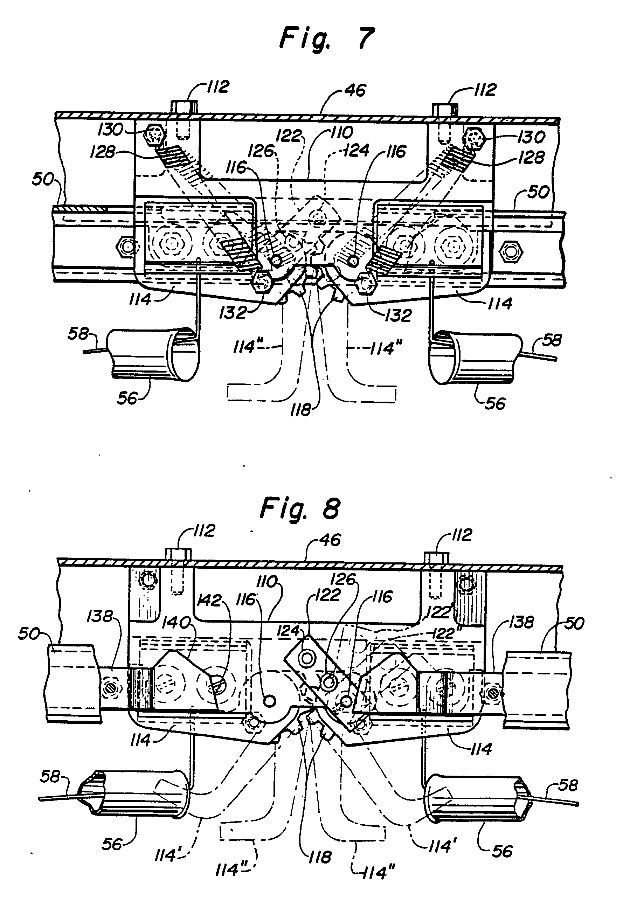

Intermeshing spur gears 118 are fixed to the arms 114. Pockets 120 are provided in the bottom of the body member 110 to accommodate portions of the arms 114 when they are pivoted to the closed positions shown in full lines in Fig. 7 and 8. A lever 122 is fixed to one of the pins 116, and carries rollers 124 and 126. Tension springs 128 are connected between bolts 130 which are fastened to the body member 110 and bolts 132 which are connected to the arms 114. As best seen in Fig. 6, cutting members such as knives 134 and generally U-shaped spring clips 136 having resilient legs 137 are fastened to the body member 110 and are disposed in the pockets 120. A pair of cam members 138 are secured to the shuttle member 50. Each of the cam members 138 has a first cam surface 140 and a second cam surface 142 arranged for engaging the rollers 124 and 126, respectively, on the lever 122.

When the shuttle member 50 is moved toward the right in Fig. 8, the cam surface 140 on the left-hand cam member 138 engages the roller 124 on the lever 122 and pivots the lever 122 to the position shown in phantom at 122'. Further movement of the shuttle member 50 toward the right in Fig. 8 causes the cam surface 142 on the left-hand cam member 138 to engage the roller 126 on the lever 122 thereby pivoting the lever 122 to the position indicated in phantom at 122''. This pivoting movement of the lever 122 causes the intermeshing spur gears 118 to be rotated, resulting in concurrent pivoting movement of the arms 114 to their partially open positions shown in phantom at 114' and finally to their fully open positions indicated in phantom at 114''. As the arms 114 are pivoted to their fully open positions 114'', the springs 128 seen in Fig. 7 will move slightly over center with respect to the pins 116 and will hold the arms 114 in that position. Subsequent opposite movement of the shuttle member 50 toward the left in Fig. 8 will result in the right-hand cam member 138 pivoting the arms 114 back toward their closed positions shown in full lines. As the arms 114 reach their partially open positions 114', the springs 128 will move sufficiently back over center with respect to the pins 116 to quickly snap the arms 114 back into their closed positions.

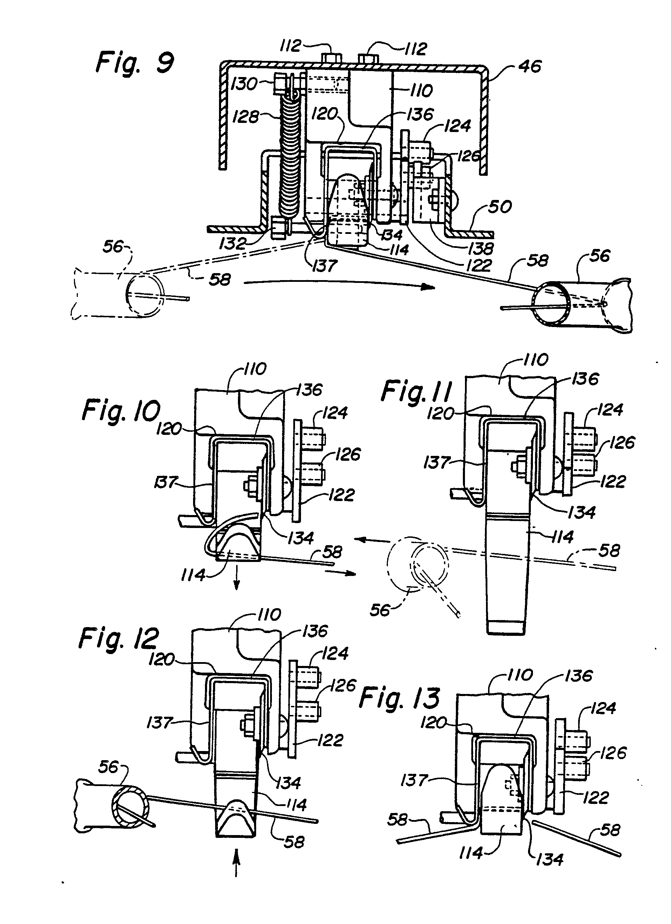

The twine cutting and clamping operation of the cut and clamp mechanism 62 will be best understood by referring to Figs. 9-13. As seen in Fig. 9, the strands of twine 58 are each initially clamped between an edge of one of the arms 114 and the resilient leg 137 of one of the spring clips 136 when the arms 114 are in their closed positions. As the arms 114 move toward their partially open positions, as shown in Fig. 10, the strands of twine 58 are released. The strands of twine 58 remain released as the arms 114 move to their fully open position shown in Fig. 11 and also as the arms 114 move back toward their closed position as shown in Fig. 12. As the arms 114 are snapped back into their closed position by the springs 128 as shown in Fig. 13, each strand of twine 58 is cut by a rapid shearing or scissors type action between an edge of one of the arms 114 and the cutting edge of one of the knives 134 while being simultaneously clamped between the other edge of the arm 114 and the resilient leg 137 of the spring clip 136.

During the formation of a roll bale in the machine of Fig. 1, the twine tubes 56 are disposed in their home or rest positions shown in full lines in Fig. 2 and the arms 114 are in their closed positions so that the strands of twine 58 are clamped in the cut and clamp mechanism 62. When the roll bale has been completed and it is desired to wrap the bale with twine, the linear actuator 94 is extended thereby moving the shuttle member 50 toward the sidewall 11a of the base frame 10. This movement of the shuttle member 50 causes the twine tubes 56 to be pivoted, due to the gear racks 86 and the pinions 68, toward the positions indicated in phantom lines at 56' in Fig. 2 while the strands of twine 58 remain clamped in the cut and clamp mechanism 62. By clamping the strands of twine 58 in the cut and clamp mechanism 62 while the twine tubes 56 are moved from their home positions to their phantom positions 56', relatively long twine tails are generated on the strands of twine 58. Further movement of the shuttle member 50 toward the sidewall 11a of the base frame 10 causes the twine tubes 56 to be pivoted to their dispensing positions shown in phantom at 56'' in Fig. 2. As the twine tubes 56 move from the phantom positions 56' to their dispensing positions 56'', the arms 114 are moved from their closed positions to their fully open positions 114'' and the strands of twine 58 are released from the cut and clamp mechanism 62. The twine tails are fed into the bale chamber in order to be caught between the floor roller 22 and the rotating bale. The linear actuator 94 is then contracted to move the shuttle member 50 back toward the sidewall 11b of the base frame 10 and thereby pivot the twine tubes 56 from their dispensing positions 56'' back toward their home positions shown in full lines in Fig. 2. During this pivoting movement of the twine tubes 56, twine is wrapped around the bale in a spiral manner. As the twine tubes 56 reach their home positions, the arms 114 are snapped back to their closed positions by the springs 128 and the strands of twine 58 are simultaneously cut and clamped in the cut and clamp mechanism 62. The wrapped bale is then discharged from the machine by pivoting the rear frame 14 upwardly in a known manner. The twine wrapping apparatus 42 is ready to wrap the next bale with twine.

It will be understood that the linear actuator 94 may be in the form of an electric servomotor or a hydraulic piston and cylinder unit. Furthermore, the linear actuator 94 may take the form of a manual device such as a threaded rod.

It will also be understood that the present invention is not limited to the arrangement as disclosed in the preferred embodiment of the twine wrapping apparatus where two twine tubes 56 are employed. Alternatively, the twine wrapping apparatus of the present invention may employ only one twine tube or any other number of twine tubes.

It will also be understood that the shuttle member 50 slidably may be supported on the support beam 46 as opposed to being mounted on the side walls 11a, 11b by the bearings 54. Similarly, the actuating means 92 alternatively may be provided inside the space defined between the opposite side walls 11a, 11b.

While in the preferred embodiment the shuttle member 50 is mounted for rectilinear movement transversely of the width of the baling machine, it will be evident that the shuttle memer 50 may be movable in other directions and indeed even may be movable in a generally fore-and-aft direction of the machine. More generally the shuttle member 50 is movable back-and-forth along a generally rectilinear path between opposed extreme positions and is drivingly connected to the or each twine dispensing tube 56.

The twine dispensing apparatus as described herebefore also advantageously may include a breakaway mechanism coupling the or each twine tube 50 to its respective driving pinion 68. The breakaway mechanism permits the twine dispensing tube 56 to be uncoupled from its driving pinion 68 when a predetermined load is exerted on the twine-dispensing tube 56 during its pivoting movement. The breakaway mechanism may include the lower plate 64 secured to the twine dispensing tube 56 and which is provided with projections formed thereon for engagement in grooves formed in the upper plate 64 coupled to the pinion 68. A spring is also provided in the breakaway mechanism to urge the projections on the lower plate 64 into the grooves in the upper plate 64. Alternatively the bolts 66 coupling the upper and lower plates 64 to each other may be shearbolts arranged to be sheared off when the twine dispensing tube 56 is overloaded.

The following claims are intended to cover all modifications and variations of the preferred embodiments of the invention without departing from the spirit and scope of the invention.

**Claims**

1. A roll baling machine having a base frame (10) and an apparatus (42) for wrapping a roll bale with twine;

said twine wrapping apparatus (42) comprising:

a twine dispensing member (56) mounted on the base frame (10) for pivotal movement back-and-forth between a retracted rest position and a dispensing start position;

a shuttle member (50) movably supported on the base frame (10) for back-and-forth movement between opposed extreme positions along a generally rectilinear path; said shuttle member (50) being drivingly connected to the twine dispensing member (56) for, upon movement of the former along said generally rectilinear path, causing the latter to pivot from the rest position to the dispensing start position when the shuttle member (50) is shifted in a first direction and from the dispensing start position to the rest position when the shuttle member (50) is shifted in a further direction opposite to the first direction; and

actuating means (92) supported on the base frame (10) and operable to move the shuttle member (50) along said generally rectilinear path; and

said twine wrapping apparatus (42) further also comprising a gear segment (68) which is cooperable with a gear rack (86) carried on the shuttle member (50); and

said roll baling machine being characterized in that:

the actuating means (92) are operatively connected to the shuttle member (50) in a manner to move by force the latter back-and-forth along said generally rectilinear path; and

the gear segment (68) is fixedly coupled to the twine dispensing member (56) and is in permanent intermeshing engagement with the gear rack (86) on the shuttle member (50) to translate said back-and-forth, generally rectilinear movement of the shuttle member (50) into said back-and-forth rotational movement of the dispensing member (56).

2. A roll baling machine according to claim 1, characterized in that the shuttle member (50) is movable generally transversely of the base frame (10) in the space defined between the opposed sidewalls (11a, 11b) of the roll baling machine.

3. A roll baling machine according to claim 2, characterized in that a support beam (46) extends transversely between, and is connected to the side walls (11a, 11b); the twine dispensing member (56), with the gear segment (68) coupled thereto, being rotatably mounted on the support beam (46) and the shuttle member (50) being movable back-and-forth lengthwise of said support beam (46).

4. A roll baling machine according to claim 3, characterized in that the shuttle member (50) is slidably supported in bearing members (54) fixedly mounted on either the opposed side walls (11a, 11b) or the support beam (46) for transverse back-and-forth movement parallel to the support beam (46).

5. A roll baling machine according to any of the claims 2 to 4 characterized in that the actuating means (92) are located outside the space defined between the opposed side walls (11a, 11b).

6. A roll baling machine according to claim 5, characterized in that the actuating means (92) comprise a linear actuator (94) connected to a lever arm (98) which, in turn, is connected to the shuttle member (50); the linear actuator (94) being selectively extendable and contractable.

7. A roll baling machine according to any of the preceding claims, characterized in that the gear segment is part of a pinion (68) attached to the twine dispensing member (56); the twine dispensing member (56) and the pinion (68) being pivotable through generally a quarter of a circle when the twine dispensing member (56) is moved from its rest position to its start position.

8. A roll baling machine according to any of the preceding claims, characterized in that the twine wrapping apparatus (42) comprises:

first and second twine dispensing members (56) pivotally mounted on the base frame (10);

first and second gear segments (68) connected to the first and second twine dispensing members (56), respectively; and

first and second gear racks (86) carried on said shuttle member (50) in permanent intermeshing engagement with the first and second gear segments (68), respectively, for, upon back-and-forth movement of the shuttle member (50) along said generally rectilinear path, pivoting the first and second twine dispensing members (56).

9. A roll baling machine according to claim 8, characterized in that the first and second gear racks (86) cooperate with the first and second gear segments (68), respectively, to cause pivoting movement of the first and second twine dispensing members (56) in opposite directions with respect to each other when the shuttle member (50) is moved in the one or the other direction.

10. A roll baling machine according to claim 8 or 9 when appended either directly or indirectly to claim 2, characterized in that the first and second twine dispensing members (56) pivotally are mounted proximate to the respective opposite side walls (11a, 11b) and generally face each other when in their rest positions and generally extend parallel to the adjacent side walls (11a, 11b) whenin their dispensing positions; the first and second gear racks (86) being provided at opposite sides of the respective pivotal mountings of the respective twine dispensing members (56).

11. A roll baling machine according to any of the preceding claims characterized in that the twine wrapping apparatus (42) further also comprises twine cutting and clamping means (62) mounted on the base frame (10); the twine cutting and clamping means (62) including:

a cutting member (134);

a resilient member (136); and

an arm (114) movable between a closed position and an open position; the arm (114) having:

a first edge which cooperates with the cutting member (134), when the arm (114) is moved to the closed position, to cut twine between said first edge and said cutting member (134); and

a second edge which cooperates with the resilient member (136), when the arm (114) is moved to the closed position, to clamp twine between said second edge and said resilient member (136).

12. A roll baling machine according to claim 11, characterized in that the resilient member comprises a spring clip (136) having a resilient leg arranged to clamp twine between said leg and said second edge of the arm (114); the twine being released from being clamped when the arm (114) is moved to the open position.

13. A roll baling machine according to claim 12, characterized in that the twine cutting and clamping means (62) further also comprise a body member (110) fixedly secured to the base frame (10); the arm (114) being pivotally mounted on the body member (110) and the cutting member (134) and the spring clip (136) being disposed in a pocket (120) formed in the body member (110).

14. A roll baling machine according to any of the claims 11 to 13 when appended to any of the claims 8 to 10, characterized in that the twine cutting and clamping means (62) comprise:

first and second cutting members (134);

first and second resilient members (136); and

first and second arms (114) each having one edge adapted for, in cooperation with a corresponding cutting member (134), cutting twine and another edge adapted for, in cooperation with a corresponding resilient member (136), clamping twine; and

first and second spur gears (118) connected to the first and second arms (114), respectively, and being in permanent intermeshing engagement with each other for causing concurrent pivoting of the first and second arms (114).

15. A roll baling machine according to claim 14 characterized in that the twine cutting and clamping means (62) further also comprise a lever (122) connected to the first arm (114) and cam means (138) carried on the shuttle member (50) for, upon movement of the shuttle member (50) in the one or other direction, engaging the lever (122) to move the first and second arms (114) between their closed and open positions.

16. A roll baling machine according to claim 15 characterized in that the lever (122) carries first and second rollers (124, 126) and in that the cam means (138) comprise first and second cam surfaces (140, 142) arranged for engaging the first and second rollers (124, 126), respectively, to move the arms (114) between the closed and open positions.

17. A roll baling machine according to any of the claims 11 to 16 characterized in that a spring (128) is connected to the arm (114), respectively to at least one of the arms (114), to urge said arm (114), respectively said first and second arms (114), into the closed and open positions.

18. A roll baling machine according to any of the preceding claims characterized in a mechanism coupling the or each twine dispensing member (56) to the or each respective gear segment (68) while permitting the or each dispensing member (56) to be uncoupled from the or each respective gear segment (68) when a predetermined load is exerted on the or each respective twine dispensing member (56) during the pivoting movement thereof.

**Patentansprüche**

1. Rundballenmaschine mit einem Grundrahmen (10) und einer Vorrichtung (42) zum Umwickeln eines Rundballens mit Bindegarn,

wobei die Bindegarn-Wickelvorrichtung (42) folgende Teile umfaßt:

ein Bindegarn-Abgabebauteil (56), das auf dem Grundrahmen (10) für eine Schwenkbewegung vor und zurück zwischen einer zurückgezogenen Ruhestellung und einer Abgabe-Anfangsposition befestigt ist,

ein Schieberbauteil (50), das auf dem Grundrahmen (10) für eine Vor- und Rückwärtsbewegung zwischen entgegengesetzten Endstellungen entlang eines allgemein geradlinigen Weges beweglich gehaltert ist, wobei das Schieberbauteil (50) in Antriebsverbindung mit dem Bindegarn-Abgabebauteil (56) steht, um bei einer Bewegung des ersteren entlang des allgemein geradlinigen Weges ein Verschwenken des letzteren von der Ruhestellung in die Abgabe-Anfangsposition bei in einer ersten Richtung verschobenen Schieberbauteil (50) und von der Abgabe-Anfangsposition in die Ruhestellung zu bewirken, wenn das Schieberbauteil (50) in einer weiteren, zur ersten Richtung entgegengesetzten Richtung verschoben wird, und

Betätigungseinrichtungen (52), die auf dem Grundrahmen (10) gehalten sind und zur Bewegung des Schieberbauteils (50) entlang des allgemein geradlinigen Weges betätigbar sind, und

wobei die Bindegarnwickelvorrichtung (42) weiterhin ein Zahnradsegment (68) aufweist, das mit einer Zahnstange (86) zusammenwirkt, die von dem Schieberbauteil (50) gehalten wird, und

wobei die Rundballenmaschine dadurch gekennzeichnet ist, daß

die Betätigungseinrichtungen (92) betriebsmäßig derart mit dem Schieberbauteil (50) verbunden sind, daß das letztere unter Kraftantrieb entlang des allgemein geradlinigen Weges hin- und zurückbewegt wird, und

daß das Zahnradsegment (68) fest mit dem BindegarnAbgabebauteil (56) verbunden ist und in dauerndem Zahnradeingriff mit der Zahnstange (86) auf dem Schieberbauteil (50) steht, um die allgemein geradlinige Hin- und Herbewegung des Schieberbauteils (50) in die vor und zurück erfolgende Drehbewegung des Abgabebauteils (56) umzuwandeln.

2. Rundballenmaschine nach Anspruch 1, dadurch gekennzeichnet, daß das Schieberbauteil (50) allgemein in Querrichtung des Grundrahmens (10) in dem Raum beweglich ist, der zwischen den gegenüberliegenden Seitenwänden (11a, 11b) der Rundballenmaschine begrenzt ist.

3. Rundballenmaschine nach Anspruch 2 dadurch gekennzeichnet, daß sich ein Tragbalken (46) in Querrichtung zwischen den Seitenwänden (11a, 11b) erstreckt und mit diesen verbunden ist, daß das Bindegarn-Abgabebauteil (56) mit dem damit gekoppelten Zahnradsegment (68) drehbar auf dem Tragbalken (46) befestigt ist, und daß das Schieberbauteil (50) in Längsrichtung des Tragbalkens hin- und herbeweglich ist.

4. Rundballenmaschine nach Anspruch 3, dadurch gekennzeichnet, daß das Schieberbauteil (50) auf fest entweder an den gegenüberliegenden Seitenwänden (11a, 11b) oder dem Tragbalken (46) befestigten Lagerteilen (54) verschiebbar für eine querverlaufende Hin- und Herbewegung parallel zum Tragbalken (56) gehaltert ist.

5. Rundballenmaschine nach einem der Ansprüche 2 bis 4, dadurch gekennzeichnet, daß die Betätigungseinrichtungen (92) außerhalb des Raumes angeordnet sind, der zwischen den gegenüberliegenden Seitenwänden (11a, 11b) umgrenzt ist.

6. Rundballenmaschine nach Anspruch 5, dadurch gekennzeichnet, daß die Betätigungseinrichtungen (92) ein Linearstellglied (94) umfassen, das mit einem Hebelarm (98) verbunden ist, der seinerseits mit dem Schieberbauteil (50) verbunden ist, wobei das Linearstellglied (94) selektiv ausfahrbar und zusammenziehbar ist.

7. Rundballenmaschine nach einem der vorhergehenden Ansprüche, dadurch gekennzeichnet, daß das Zahnradsegment ein Teil eines Ritzels (68) ist, das an dem Bindegarn-Abgabebauteil (56) befestigt ist, und daß das Bindegarn-Abgabebauteil (56) und das Ritzel (68) über allgemein ein Viertel eines Kreises verschwenkbar sind, wenn das Bindgarn-Abgabebauteil (56) von seiner Ruhestellung in die Ausgangsstellung bewegt wird.

8. Rundballenmaschine nach einem der vorhergehenden Ansprüche, dadurch gekennzeichnet, daß die Bindegarn-Wickelvorrichtung (42)

erste und zweite schwenkbar auf dem Grundrahmen (10) befestigte Bindgarn-Abgabebauteile (56),

erste und zweite mit dem ersten bzw. zweiten Bindgarn-Abgabebauteil (56) verbundene Zahnradsegmente (68) und

erste und zweite Zahnstangen (86) umfaßt, die von dem Schieberbauteil (50) in dauerndem Zahnradeingriff mit dem ersten bzw. zweiten Zahnradsegment (68) gehaltert sind, um bei der Hin- und Herbewegung des Schieberbauteils (50) entlang des allgemein geradlinigen Weges die ersten und zweiten Bindegarn-Abgabebauteile (56) zu verschwenken.

9. Rundballenmaschine nach Anspruch 8, dadurch gekennzeichnet, daß die ersten und zweiten Zahnstangen (86) mit dem ersten bzw. zweiten Zahnradsegment (68) zusammenwirken, um eine Schwenkbewegung der ersten und zweiten Bindegarn-Abgabebauteile (56) in entgegengesetzten Richtungen bezüglich einander hervorzurufen, wenn das Schieberbauteil (50) in der einen oder anderen Richtung bewegt wird.

10. Rundballenmaschine nach Anspruch 8 oder 9 bei entweder direkter oder indirekter Rückbeziehung auf Anspruch 2, dadurch gekennzeichnet, daß die ersten und zweiten Bindegarn-Abgabebauteile (56) schwenkbar in der Nähe der jeweiligen gegenüberliegenden Seitenwände (11a, 11b) befestigt und allgemein aufeinander gerichtet sind, wenn sie sich in ihren Ruhestellungen befinden, während sie sich allgemein parallel zu den benachbarten Seitenwwänden (11a, 11b) erstrekken, wenn sie sich in ihren Abgabepositionen befinden, und daß die ersten und zweiten Zahnstangen (86) auf entgegengesetzten Seiten der jeweiligen Schwenkbefestigungen für die jeweiligen Bindegarn-Abgabebauteile (56) vorgesehen sind.

11. Rundballenmaschine nach einem der vorhergehenden Ansprüche, dadurch gekennzeichnet, daß die Bindegarn-Wickelvorrichtung (42) weiterhin Bindegarn-Schneidund Klemmeinrichtungen (62) umfaßt, die auf dem Grundrahmen (10) befestigt sind und folgende Teile umfassen:

ein Schneidteil (134)

ein elastisches Teil (136) und

einen Arm (114), der zwischen einer geschlossenen Stellung und einer offenen Stellung beweglich ist, wobei der Arm

eine erste Kante, die mit dem Schneidteil (134) zusammenwirkt, wenn der Arm (114) in die geschlossene Stellung bewegt wird, um Bindegarn zwischen der ersten Kante und dem Schneidteil (134) zu schneiden, und

eine zweite Kante aufweist, die mit dem elastischen Bauteil (136) zusammenwirkt, wenn der Arm (114) in die geschlossene Stellung bewegt wird, um Bindegarn zwischen der zweiten Kante und dem elastischen Teil (136) einzuklemmen.

12. Rundballenmaschine nach Anspruch 11, dadurch gekennzeichnet, daß das elastische Teil ein Federklammer (136) mit einem elastischen Schenkel aufweist, der so ausgebildet ist, daß er Bindegarn zwischen diesem Schenkel und der zweiten Kante des Arms (114) einklemmt, und daß die Klemmung des Bindegarns aufgehoben wird, wenn der Arm (114) in die offene Stellung bewegt wird.

13. Rundballenmaschine nach Anspruch 12, dadurch gekennzeichnet, daß die Bindegarn-Schneid- und Klemmeinrichtungen (62) weiterhin einen Hauptteil (110) aufweisen, der fest an den Grundrahmen (10) befestigt ist, wobei der Arm (114) schwenkbar an dem Hauptteil (110) befestigt ist und das Schneidteil (134) und die Federklammer (136) in einer Tasche (120) angeordnet sind, die in dem Hauptteil (110) ausgebildet ist.

14. Rundballenmaschine nach einem der Ansprüche 11 bis 13 unter Rückbeziehung auf einen der Ansprüche 8 bis 10, dadurch gekennzeichnet, daß die Bindgarn-Schneid- und Klemmeinrichtungen (62) folgende Teile umfassen:

erste und zweite Scheidteile (134),

erste und zweite elastische Teile (16), und

erste und zweite Arme (114), die jeweils eine Kante, die zum Zusammenwirken mit einem entsprechenden Schneidteil (134) zum Schneiden von Bindegarn ausgebildet ist, und eine weitere Kante aufweisen, die unter Zusammenwirken mit einem entsprechenden elastischen Teil (136) zum Einklemmen von Bindegarn ausgebildet ist und

erste und zweite Stirnzahnräder (118), die mit dem ersten bzwzweiten Arm (114) verbunden sind und in dauerndem Getriebeeingriff miteinander stehen, um eine gleichzeitige Schwenkbewegung der ersten und zweiten Arme (114) hervorzurufen.

15. Rundballenmaschine nach Anspruch 14, dadurch gekennzeichnet, daß die Bindegarn-Schneidund Klemmeinrichtungen (62) weiterhin einen mit dem ersten Arm (114) verbundenen Hebel (122) und von dem Schieberbauteil (50) getragene Nockenteile (138) umfasssen, um bei einer Bewegung des Schieberbauteils (50) in der einen oder anderen Richtung mit dem Hebel (122) in Eingriff zu kommen und die ersten und zweiten Arme (114) zwischen ihren geschlossenen und offenen Positionen zu bewegen.

16. Rundballenmaschine nach Anspruch 15, dadurch gekennzeichnet, daß der Hebel (122) erste und zweite Rollen (124, 126) trägt und daß die Nockenteile (138) erste und zweite Nockenoberflächen (140, 142) aufweisen, die so ausgebildet sind, daß sie mit der ersten bzw. zweiten Rolle (124, 126) in Eingriff kommen, um die Arme (114) zwischen den geschlossenen und offenen Stellungen zu bewegen.

17. Rundballenmaschine nach einem der Ansprüche 11 bis 16, dadurch gekennzeichnet, daß eine Feder (128) mit dem Arm (114) bzw. mit zumindestens einem der Arme (114) verbunden ist, um den Arm (114) bzw. die ersten und zweiten Arme (114) in die geschlossenen und offenen Stellungen zu drücken.

18. Rundballenmaschine nach einem der vorhergehenden Ansprüche, gekennzeichnet durch einen Mechanismus, der das oder jedes Bindgarn-Abgabebauteil (56) mit dem oder jedem jeweiligen Zahnradsegment (68) koppelt, während das oder jedes Abgabebauteil (56) von dem oder jedem jeweiligen Zahnradsegment (68) entkuppelbar ist, wenn eine vorgegebene Last auf das oder jedes jeweilige Bindegarn-Abgabebauteil (56) während dessen Schwenkbewegung ausgeübt wird.

## Revendications

1. Machine de ramassage-pressage à balles cylindriques comportant un châssis de base (10) et un appareil (42) destiné à enrouler une ficelle autour d'une balle cylindrique;

ledit appareil enrouleur de ficelle (42) comprenant:

un organe distributeur de ficelle (56) monté sur le châssis de base (10) pour opérer un mouvement pivotant de va-et-vient entre une position de repos rétractée et une position de démarrage de distribution;

un organe formant navette (50) monté mobile sur le châssis de base (10) pour opérer un mouvement de va-et-vient entre des positions extrêmes opposées le long d'une trajectoire sensiblement rectiligne; ledit organe formant navette (50) étant accouplé dans une relation d'entraînement avec l'organe distributeur de ficelle (56) pour que, lors d'un déplacement du premier le long de ladite trajectoire sensiblement rectiligne, le second soit obligé de pivoter de la position de repos dans la position de démarrage de distribution, lorsque l'organe formant navette (50) est déplacé dans une première direction, et de la position de démarrage de distribution dans la position de repos, lorsque l'organe formant navette (50) est déplacé dans une seconde direction opposée à la première direction; et

des moyens d'actionnement (92) montés sur le châssis de base (10) et aptes à opérer pour déplacer l'organe formant navette (50) le long de ladite trajectoire sensiblement rectiligne; et

ledit appareil enrouleur de ficelle (42) comprenant également un segment denté (68) apte à coopérer avec une crémaillère (86) portée par l'organe formant navette (50); et

ladite machine de ramassage-pressage de balles cylindriques étant caractérisée en ce que:

les moyens d'actionnement (92) sont reliés d'une manière fonctionnelle avec l'organe formant navette (50), de façon à faire, sous l'effet d'une force, opérer à ce dernier un mouvement de va-et-vient le long de ladite trajectoire sensiblement rectiligne; et

le segment denté (68) est accouplé d'une manière fixe avec l'organe distributeur de ficelle (56) et dans une relation d'engrènement continu avec la crémaillère (86) prévue sur l'organe formant navette (50), pour transformer ledit mouvement de va-et-vient sensiblement rectiligne de l'organe formant navette (50) en mouvement de va-et-vient rotatif de l'organe distributeur (56).

2. Machine de ramassage-pressage de balles cylindriques selon la revendication 1, caractérisée en ce que l'organe formant navette (50) est mobile sensiblement transversalement par rapport au châssis de base (10), dans l'espace défini entre les parois latérales opposées (11a, 11b) de la machine de ramassage-pressage de balles cylindriques.

3. Machine de ramassage-pressage de balles cylindriques selon la revendication 2, caractérisée en ce qu'une poutre de support (46) s'étend transversalement entre les parois latérales (11a,

11b) et est reliée à celles-ci; l'organe distributeur de ficelle (56) avec lequel le segment denté (68) est accouplé, étant monté rotatif sur la poutre de support (46), tandis que l'organe formant navette (50) est apte à opérer un mouvement de va-et-vient dans le sens de la longueur de ladite poutre de support (46).

4. Machine de ramassage-pressage de balles cylindriques selon la revendication 3, caractérisée en ce que l'organe formant navette (50) est supporté à coulissement dans des organes d'appui (54) montés fixes soit sur les parois latérales opposées (11a, 11b) soit sur la poutre de support (46), en vue d'opérer un mouvement de va-et-vient transversal parallèlement à la poutre de support (46).

5. Machine de ramassage-pressage de balles cylindriques selon l'une quelconque des revendications 2 à 4, caractérisée en ce que les moyens d'actionnement (92) sont positionnés à l'extérieur de l'espace défini entre les parois latérales opposées (11a, 11b).

6. Machine de ramassage-pressage de balles cylindriques selon la revendication 5, caractérisée en ce que les moyens d'actionnement (92) comportent un organe d'actionnement linéaire (94) relié à un bras formant levier (98) lui-même relié à l'organe formant navette (50); l'organe d'actionnement linéaire (94) étant apte à s'étendre ou à se rétracter sélectivement.

7. Machine de ramassage-pressage de balles cylindriques selon l'une quelconque des revendications précédentes, caractérisée en ce que le segment denté fait partie d'un pignon (68) fixé à l'organe distributeur de ficelle (56); l'organe distributeur de ficelle (56) et le pignon (68) étant aptes à pivoter sur sensiblement un quart de cercle, lorsque l'organe distributeur de ficelle (56) est déplacé de sa position de repos dans sa position de démarrage.

8. Machine de ramassage-pressage de balles cylindriques selon l'une quelconque des revendications précédentes, caractérisée en ce que l'appareil enrouleur de ficelle (42) comporte:

des premier et second organes distributeurs de ficelle (56) montés pivotant sur le châssis de base (10);

des premier et second segments dentés (68) respectivement accouplés avec les premier et second organes distributeurs de ficelle (56); et

des première et seconde crémaillères (86) respectivement portées par ledit organe formant navette (50) dans une relation d'engrènement continu avec les premier et second segments dentés (68), pour, lors d'un mouvement de va-et-vient de l'organe formant navette (50) le long de ladite trajectoire sensiblement rectiligne, faire pivoter les premier et second organes distributeurs de ficelle (56).

9. Machine de ramassage-pressage de balles cylindriques selon la revendication 8, caractérisée en ce que les première et seconde crémaillères (86) coopèrent respectivement avec les premier et second segments dentés (68), pour provoquer un mouvement pivotant des premier et second organes distributeurs de ficelle (56) dans des directions opposées l'un par rapport à l'autre, lorsque l'organe formant navette (50)-est déplacé dans l'une ou l'autre direction.

10. Machine de ramassage-pressage de balles cylindriques selon la revendication 8 ou 9, lorsqu'elles sont annexées directement ou indirectement à la revendication 2, caractérisée en ce que les premier et second organes distributeurs de ficelle (56) sont montés pivotant à proximité des parois latérales opposées (11a, 11b) respectives et se font sensiblement face mutuellement, lorsqu'ils sont dans leurs positions de repos, tandis qu'ils s'étendent sensiblement parallèlement aux parois latérales adjacentes (11a, 11b), lorsqu'ils sont dans leurs positions de distribution; les première et seconde crémaillères (86) étant disposées au niveau de côtés opposés des montages pivotants respectifs des organes distributeurs de ficelle (56) correspondants.

11. Machine de ramassage-pressage de balles cylindriques selon l'une quelconque des revendications précédentes, caractérisée en ce que l'appareil enrouleur de ficelle (42) comporte également des moyens de coupe et de serrage de ficelle (62) montés sur le châssis de base (10); les moyens de coupe et de serrage de ficelle (62) comprenant:

un organe de coupe (134);

un organe élastique (136); et

un bras (114) mobile entre une position fermée et une position ouverte; le bras (114) possédant:

un premier bord qui coopère avec l'organe de coupe (134), lorsque le bras (114) est déplacé dans la position fermée, pour couper une ficelle entre ledit premier bord et ledit organe de coupe (134); et

un second bord qui coopère avec l'organe élastique (136), lorsque le bras (114) est déplacé dans la position fermée, pour serrer une ficelle entre ledit second bord et ledit organe élastique (136).

12. Machine de ramassage-pressage de balles cylindriques selon la revendication 11, caractérisée en ce que l'organe élastique comporte une pince à ressort (136) pourvue d'une branche élastique conçue pour serrer une ficelle entre ladite branche et ledit second bord du bras (114), la ficelle cessant d'être serrée, lorsque le bras (114) est déplacé dans la position ouverte.

13. Machine de ramassage-pressage de balles cylindriques selon la revendication 12, caractérisée en ce que les moyens de coupe et de serrage de ficelle (62) comportent également un corps (110) assujetti fixement au châssis de base (10), le bras (114) étant monté pivotant sur le corps (110), tandis que l'organe de coupe (134) et la pince à ressort (136) sont disposés dans une alvéole (120) formée dans le corps (110).

14. Machine de ramassage-pressage de balles cylindriques selon l'une quelconque des revendications 11 à 13, lorsqu'elles sont annexées à l'une quelconque des revendications 8 à 10, caractérisée en ce que les moyens de coupe et de serrage de ficelle (62) comportent:

des premier et second organes de coupe (134);

des premier et second organes élastiques (136); et

des premier et second bras (114) possédant respectivement un premier bord adapté pour, en coopération avec un organe de coupe (134) correspondant, couper une ficelle, et un second bord adapté pour, en coopération avec un organe élastique (136) correspondant, serrer une ficelle; et

des première et seconde roues droites (118) respectivement accouplées avec les premier et second bras (114), et dans une relation d'engrènement continu l'une avec l'autre, pour provoquer un pivotement simultané des premier et second bras (114).

15. Machine de ramassage-pressage de balles cylindriques selon la revendication 14, caractérisée en ce que les moyens de coupe et de serrage de ficelle (62) comportent également un levier (122) relié au premier bras (114), et des moyens formant came (138) portés par l'organe formant navette (50) pour, lors d'un déplacement de l'organe formant navette (50) dans l'une ou l'autre direction, contraindre le levier (122) à déplacer les premier et second bras (114) entre leurs positions fermée et ouverte.

16. Machine de ramassage-pressage de balles cylindriques selon la revendication 15, caracterisèe en ce que le levier (122) porte des premier et second galets (124, 126), et en ce que les moyens formant came (138) comportent des première et seconde surfaces de came (140, 142) conçues pour contraindre respectivement les premier et second galets (124, 126) à déplacer les bras (114) entre les positions fermée et ouverte.

17. Machine de ramassage-pressage de balles cylindriques selon l'une quelconque des revendications 11 à 16, caractérisée en ce qu'un ressort (128) est relié au bras (114), respectivement à l'un au moins des bras (114), pour solliciter ledit bras (114), respectivement lesdits premier et second bras (114), dans les positions fermées et ouvertes.

18. Machine de ramassage-pressage de balles cylindriques selon l'une quelconque des revendications précédentes, caractérisée par un mécanisme qui accouple le ou les organe(s) distributeur(s) de ficelle (56) avec le ou les segment(s) denté(s) (68) respectif(s), tout en permettant un désaccouplement du ou des organes distributeur(s) (56) vis-a-vis du ou des segment(s) denté(s) (68) respectif(s), lorsqu'une sollicitation prédéterminee est exercée sur le ou les organe(s) distributeur(s) de ficelle (56) respectif(s), pendant le mouvement pivotant de celui-ci ou de ceux-ci.

Fig. I

*Fig. 2*

EP 0 159 093 B1

Fig. 3

Fig. 4

## Fig. 5

## Fig. 6

## Fig. 7

## Fig. 8

Fig. 9

Fig. 10

Fig. 11

Fig. 12

Fig. 13